# EUROPÄISCHE PATENTANMELDUNG

(11) **EP 1 961 958 A2**
(43) Veröffentlichungstag der Anmeldung: **27.08.2008**
(21) Anmeldenummer: 08002020.9
(22) Anmeldetag: 04.02.2008
(51) Int. Cl.: F03D 11/00

(54) **Getriebe-Nabeneinheint für eine Windkraftanlage**

(30) Priorität: 22.02.2007 DE 102007008758
(71) Anmelder: Schuler Pressen GmbH & Co. KG, 73033 Göppingen (DE)
(72) Erfinder: Fahrenbach, Jürgen, 73101 Aichelberg (DE); Hofele, Hans, 73035 Göppingen (DE); Dangelmayr, Andreas, 73113 Ottenbach (DE); Schade, Volker, 73072 Donzdorf (DE)
(74) Vertreter: Rüger, Barthelt & Abel Patentanwälte

(57) **Zusammenfassung**

Eine erfindungsgemäße Getriebe-Nabeeinheit (1) für eine Windenergieanlage weist ein drehbar gelagertes einstückiges Getriebeteil (12, 27) auf, das sowohl das Eingangszahnrad (11) des Getriebes (3) als auch die Nabe (2) trägt. Vorzugsweise sind lediglich zwei Radiallager (16, 18) zur Lagerung der Nabe (2) und des Zahnrads (11) vorgesehen. Axiallager können zusätzlich vorgesehen sein. Es ergibt sich eine besonders kompakte kurze und leichte Bauform für das Getriebe (3) und die Nabe (2). Das Konzept eignet sich insbesondere für besonders große Windenergieanlagen.

## Beschreibung

Die Erfindung betrifft eine Getriebe-Nabeneinheit einer Windenergieanlage.

Windkraft- oder Windenergieanlagen weisen in der Regel einen Rotor mit zumindest einem, meist aber zwei oder drei Rotorblättern auf, der um eine im Wesentlichen horizontale Drehachse drehbar gelagert ist und einen Generator antreibt. Dabei werden grundsätzlich zwei verschiedene Konzepte verfolgt. Ein erstes Konzept kommt ohne Getriebe aus. Der Generator ist mit dem Rotor drehfest verbunden. Ein anderes beliebtes Konzept liegt in der Zwischenschaltung eines Übersetzungsgetriebes zwischen Rotor und Generator. Der Generator läuft mit vergleichsweise höherer Drehzahl und kann somit kleiner und leichter bauen. Er kommt mit einer niedrigeren Polzahl aus.

Z.B. offenbart die DE 10 2004 036 005 A1 ein solches Konzept, wobei von dem Rotor ein zentrales Zahnrad angetrieben ist, das mehrere Vorgelegewellen treibt, die somit eine Leistungsverzweigung bilden. Die Vorgelegewellen treiben über mehrere Getriebestränge einen gemeinsamen Generator.

Die DE 199 17 605 B4 offenbart ebenfalls ein Getriebe für eine Windenergieanlage, das zum Aufstecken auf eine Rotorwelle vorgesehen ist. Das Getriebe ist als Planetengetriebe ausgebildet.

Ein weiteres Getriebe für eine Windkraftanlage ist aus der DE 101 59 973 A1 bekannt. Auch dieses Getriebe ist als selbständige Baueinheit konzipiert, die mit der Rotorwelle eines Rotors zu kuppeln ist.

Windenergieanlage unterliegen mehreren Restriktionen. Beispielsweise muss die Rotorwelle auf einen Turm in erheblicher Höhe in einer entsprechenden Gondel montiert werden. Dabei wird angestrebt, das Gewicht der Gondel und auch den Materialaufwand für diese und deren Bestandteile trotz zunehmender Größe solcher Anlagen in erträglichen Grenzen zu halten. Des Weiteren sind Größenrestriktionen zu beachten. Die Rotornabe, das Getriebe, die Gondel und deren Teile dürfen in der Regel ein Grenzmaß nicht unterschreiten, das durch die Lichtraumprofile der Zufahrtstraßen begrenzt ist. Zu große Teile lassen sich schlicht nicht an den Einsatzort transportieren. Dies gilt insbesondere für landbasierte Systeme, stellt aber auch bei Offshore-Anlagen ein Problem dar.

Schließlich treten an Windenergieanlagen häufig sehr große und auch zufällige, d.h. stochastische Lasten auf, die nicht zu einer Beschädigung oder Ermüdung der Anlage führen dürfen.

Davon ausgehend ist es Aufgabe der Erfindung, ein verbessertes Konzept zum Aufbau einer Gondel einer Windenergieanlage anzugeben.

Diese Aufgabe wird mit der erfindungsgemäßen Getriebe-Nabeneinheit einer Windenergieanlage gelöst, bei der die Nabe an einem starren Getriebeteil festgehalten ist, das sowohl der Lagerung des ersten Zahnrads des Übersetzungsgetriebes als auch der Lagerung der Nabe dient. Im Grund genommen werden Nabe und Zahnrad zu einer starren Baueinheit verbunden, wodurch die Nabenlagerung mit der Zahnradlagerung identisch ist.

Mit der Erfindung werden bisherige Konzepte verlassen, bei denen die Lagerung des Eingangszahnrads des Getriebes von der Lagerung des Rotors getrennt waren. Durch das erfindungsgemäße Konzept ergibt sich ein kompakter platzsparender Aufbau von Nabe und Getriebe. Insbesondere ergibt sich ein kurzer Aufbau, wobei jedoch der Stützabstand, d.h. der axiale Abstand der beiden beteiligten Radiallager maximiert werden kann. Vorzugsweise ist eine Flanschverbindung zwischen der Nabe und dem starren Getriebeteil zwischen den beiden Radiallagern vorgesehen. Weiter vorzugsweise ist das Zahnrad ebenfalls zwischen den beiden Radiallagern oder in unmittelbarer Nachbarschaft zu einem der Lager vorgesehen. Eines der beiden Radiallager ist vorzugsweise innerhalb der Nabe angeordnet. Damit lässt sich der Lagerstützabstand maximieren.

Vorzugsweise ist das Getriebeteil auf einem rohrförmigen Träger gelagert. Dieses Konzept ermöglicht die Minimierung von Kippbewegungen des Getriebeteils, die sich nachteilig auf den Zahneingriff des Zahnrads auswirken könnten. Weitere Maßnahmen zur Minimierung der Kippbewegung können getroffen sein. Zu diesen Maßnahmen gehören beispielsweise die Ausbildung zumindest eines der Lager als Wälzlager, beispielsweise als Rollenlager. Vorzugsweise werden beide Radiallager als Rollenlager ausgeführt. Es können aber auch Gleitlager vorgesehen werden, wobei diese vorzugsweise mit Mitteln zur Spielminimierung versehen sein können. Das Zahnrad kann mit dem Getriebeteil nahtlos einteilig ausgebildet werden, beispielsweise indem die Einheit als entsprechendes Gussteil hergestellt wird. Es ist jedoch auch möglich, das Getriebeteil und das Zahnrad gesondert herzustellen und nachträglich miteinander zu verbinden, beispielsweise zu verschweißen oder zu verschrauben. In Betrieb sind das Zahnrad und das Getriebeteil unabhängig davon jedenfalls vorzugsweise starr miteinander verbunden.

Das Zahnrad kämmt vorzugsweise mit zumindest zwei schneller laufenden Zahnrädern. Diese treiben bei einer bevorzugten Bauform paarweise über weitere Zahnräder einen Generator an. Vorzugsweise sind mehrere solcher Zahnradgeneratoreinheiten vorgesehen, so dass sich eine Lastaufteilung auf mehrere schnell laufende Generatoren ergibt.

Weitere Einzelheiten vorteilhafter Ausführungsformen der Erfindung ergeben sich aus der Zeichnung, der Beschreibung oder Ansprüchen. Die Beschreibung beschränkt sich auf wesentliche Aspekte der Erfindung und sonstiger Gegebenheiten. Die Zeichnung ist ergänzend heranzuziehen. Sie offenbart weitere Details. In der Zeichnung sind Ausführungsbeispiele der Erfindung veranschaulicht. Es zeigen:
Figur 1 eine Getriebe-Nabeneinheit in perspektivischer Übersichtsdarstellung,
Figur 2 die Getriebe-Nabeneinheit nach Figur 1 in perspektivischer, längs geschnittener Darstellung,
Figur 3 die Getriebe-Nabeneinheit nach Figur 1 und 2 in schematisierter Darstellung,
Figur 4 eine alternative Ausführungsform der Getriebe-Nabeneinheit in schematisierter Darstellung,
Figur 5 ein Getriebeschema der Getriebe-Nabeneinheit nach einer der Figuren 1 bis 4 in schematisierter Darstellung,
Figur 6 eine abgewandelte Ausführungsform einer Getriebe-Nabeneinheit in perspektivischer, längs geschnittener Darstellung, und
Figur 7 eine Kampaktlagereinheit zur Lagerung der Nabe und des Getriebeeingangszahnrads der Getriebe-Nabeneinheit nach Figur 6 in perspektivischer Darstellung.

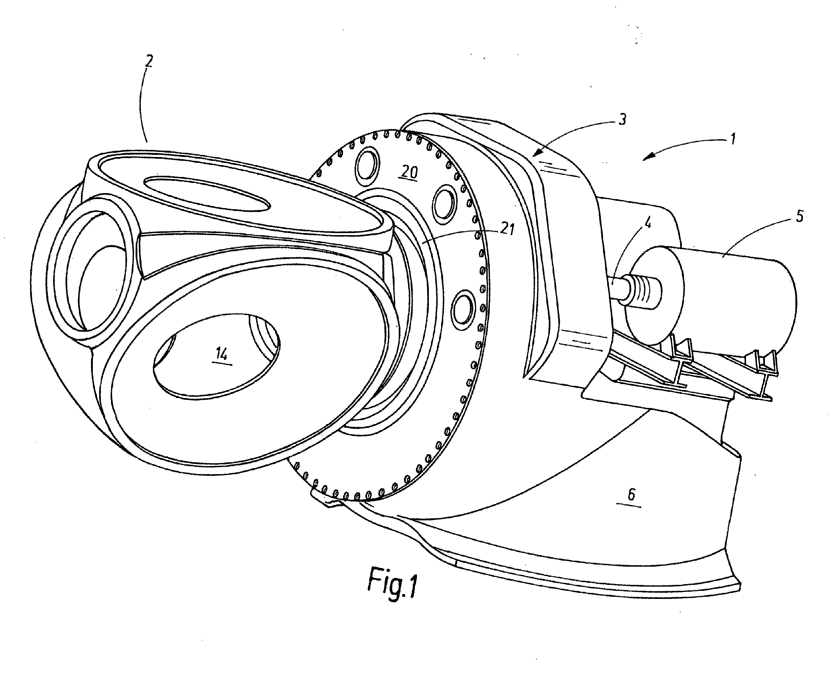

In Figur 1 ist eine Getriebe-Nabeneinheit einer Windenergieanlage veranschaulicht. Die Getriebe-Nabeneinheit 1 ist in einer Gondel, beispielsweise auf einem Turm, montiert. Sie trägt an ihrer als hohles Gehäuse ausgebildeten Nabe 2 mehrere, beispielsweise drei, Rotorblätter, wobei sie die Drehung der Nabe mittels eines Getriebes 3 in eine schnelle Drehung der Antriebswelle 4 zumindest eines elektrischen Generators 5 umsetzt. Figur 1 ist nicht maßstäblich.

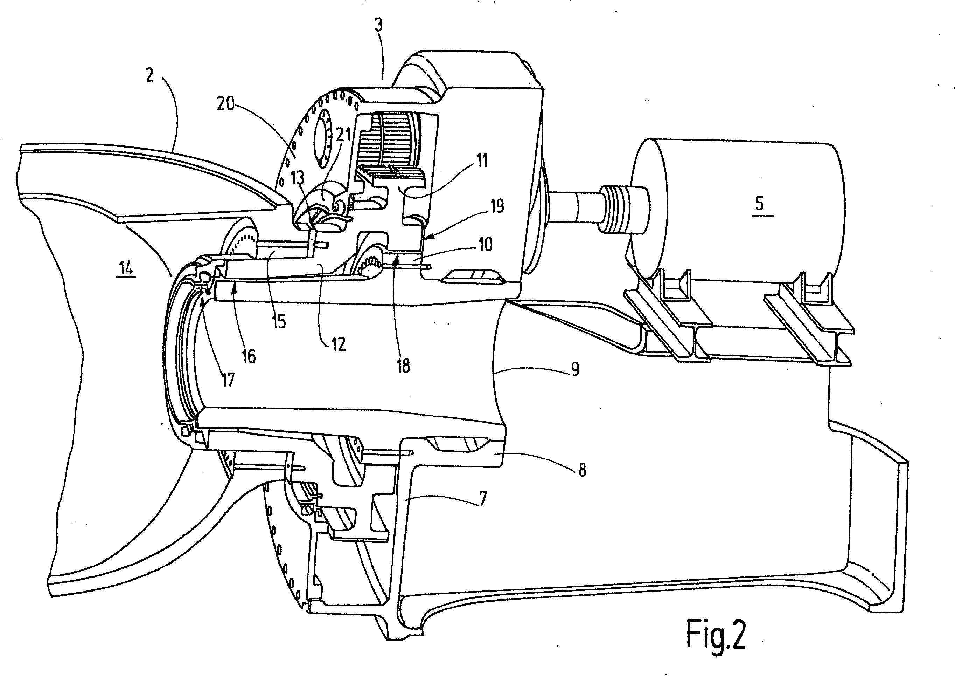

Zu der Getriebe-Nabeneinheit 1 gehört ein Gestell 6, das die Gondel bildet oder mit dieser verbunden ist. Es ist um eine horizontale Achse dreh- oder schwenkbar gehalten. An dem Gestell 6 ist eine vordere, im Wesentlichen vertikale Wand 7 ausgebildet, die aus Figur 2 ersichtlich ist, und die einen Sitz 8 zur ruhenden Lagerung einer Hülse 9 ausgebildet ist. Die Hülse 9 sitzt mit einem Ende in dem im Wesentlichen zylindrischen Sitz 8 und erstreckt sich ausgehend von diesem freitragend von der Wand 7 weg. Die Hülse 9 ist mit einem Radialflansch 10 versehen, der im Bereich des Sitzes 8 mit der Wand 7 verschraubt ist.

Die Hülse 9 weist einen zentralen Durchgang auf, durch den nicht weiter veranschaulichte Elemente in die Nabe 2 führen. Diese Elemente sind beispielsweise Wellen, Stangen oder Leitungen, die zur mechanischen, pneumatischen, hydraulischen oder elektrischen Rotorblattverstellung dienen.

Die Hülse 9 dient der Lagerung der Nabe 2 wie auch der Lagerung eines Zahnrads 11, das Teil des Getriebes 3 ist. Das Zahnrad 11 bildet das Eingangszahnrad dieses Getriebes 3. Es ist im vorliegenden Ausführungsbeispiel einstückiger Bestandteil eines Getriebeelements 12, das auf der Hülse 9 drehbar gelagert ist. Das Getriebeteil 12 weist an einem Außenumfang in einem Abstand von seinen Stirnseiten eine Schulter 13 auf, bei der die Nabe 2 mit dem Getriebeteil 12 verschraubt ist. Dazu weist die Nabe 2 einen entsprechenden Flansch mit Befestigungsbohrungen auf. Die Nabe 2 sitzt somit auf dem Außenumfang des Getriebeteils 12.

Das Getriebeteil 12 erstreckt sich wie die Hülse 9 in den von der Nabe 2 umschlossenen Innenraum 14 hinein. An ihrem vorderen Ende, d.h. vorzugsweise vor dem Befestigungsflansch 15 ist zwischen dem innerhalb der Nabe 2 liegenden Ende des Getriebeteils 12 und dem entsprechenden Ende der Hülse 9 ein Radiallager 16 ausgebildet. Dieses Radiallager kann als Gleitlager ausgebildet sein. Bevorzugterweise ist es jedoch als Rollenlager ausgebildet. An dem stirnseitigen Ende der Hülse 9 und des Getriebeteils 12 ist eine vorzugsweise als Labyrinthdichtung ausgebildete Dichtungsanordnung 17 mit mehreren ruhenden und drehenden Dichtungsringen angeordnet, um aus dem Radiallager 16 austretendes Öl oder sonstigen Schmierstoff aufzufangen und dem Schmierkreislauf wieder zuzuführen.

An dem Getriebeteil 12 ist, wie erwähnt, das Zahnrad 11 ausgebildet. In der bevorzugten Ausführungsform sind die Hülse 12 und das Zahnrad 11 als einstückiges Gussteil ausgebildet. Es kann jedoch auch als Schweißkonstruktion aufgebaut oder mehrteilig gebaut sein. Das Zahnrad 11 ist vorzugsweise ein Stirnrad mit doppelter Schrägverzahnung (Pfeilverzahnung). Diese bewirkt eine automatische Zentrierung der miteinander kämmenden Zahnräder zueinander. Prinzipiell ist jedoch auch Geradverzahnung, wie in Figur 2 veranschaulicht, möglich. Als Verzahnung eignet sich eine Evolventenverzahnung oder auch Zykloidenverzahnung. Eine Evolventenverzahnung wird bevorzugt, wenn an der Lagerung des Getriebeteils 12 mit größerem Lagerspiel zu rechnen ist.

Zu der Lagereinrichtung des Getriebeteils 12 gehört ein zweites Radiallager 18, das im vorliegenden Ausführungsbeispiel im unmittelbaren Anschluss an das Zahnrad 11 angeordnet ist. Somit liegt-das zweite, die Nabe 2 lagernde Radiallager 18 innerhalb des Getriebes 3. Das Radiallager 18 kann wiederum als Gleit- oder wie es bevorzugt wird, als Rollenlager ausgebildet sein.

Zu der Lagereinrichtung können des Weiteren ein oder mehrere axiale Drucklager, wie beispielsweise das in Nachbarschaft des Radiallagers 18 angeordnete Axiallager 19 gehören. Dieses befindet sich ebenfalls innerhalb des Getriebes 3 und dient zur Aufnahme von Axialschub. Es kann als Wälzlager oder auch als Gleitlager ausgebildet sein. Ein zweites nicht veranschaulichtes Axiallager kann beispielsweise an dem vorderen Ende des Getriebeteils 12 in Nachbarschaft zu dem Radiallager 16 oder an sonstiger geeigneter Stelle angeordnet sein, um Axialkräfte aufzunehmen. Die Axialkräfte dieses Axiallagers sind den Axialkräften des Axiallagers 19 entgegen gerichtet.

Das Getriebe 3 ist an seiner der Nabe 2 zugewandten Seite durch eine Stirnwand 20 abgeschlossen. Diese weist eine zentrale Öffnung auf, durch die sich das Getriebeteil 12 hindurch erstreckt. Zur Abdichtung und zum Auffangen von aus dem Getriebe 3 stammendem Schmiermittel oder Öl ist die Stirnwand 20 mit einer Dichtungsanordnung 21 versehen. Diese ist vorzugsweise als Labyrinthdichtung ausgebildet.

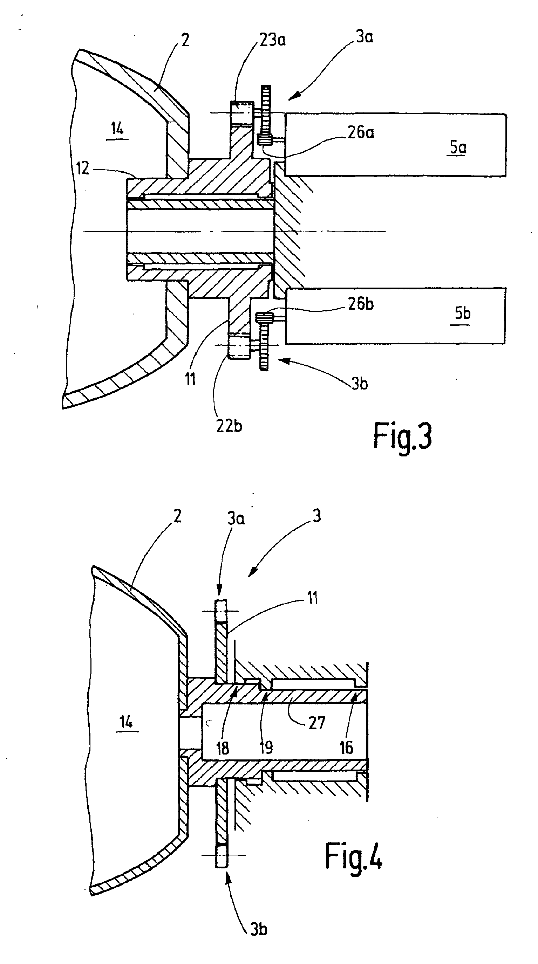

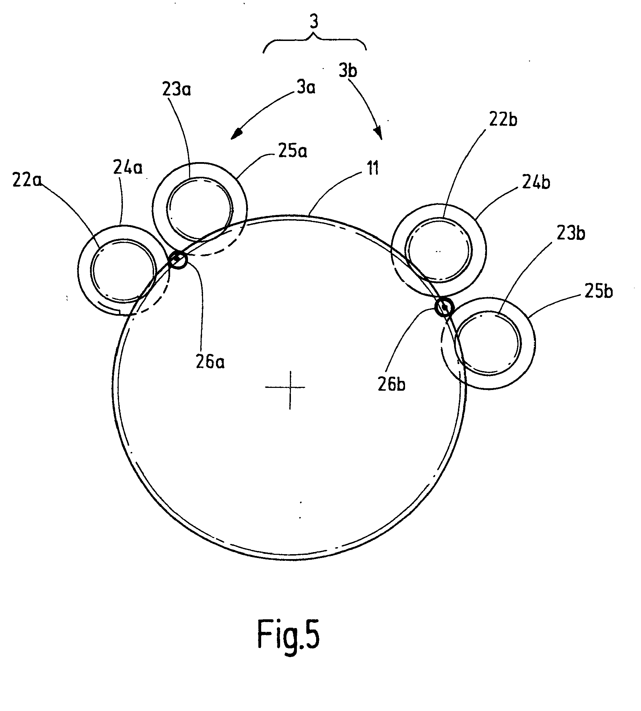

Die Figuren 3 und 5 veranschaulichen die Funktion der Lagerung und des Getriebes 3 näher. Wie ersichtlich, ist jedem der vorhandenen Generatoren 5a, 5b ein Teilgetriebe 3a, 3b zugeordnet, das die Drehung des Zahnrads 11 ins Schnelle übersetzt. Die Getriebe 3a, 3b sind untereinander vorzugsweise gleich aufgebaut und an verschiedenen Stellen des Umfangs des Zahnrads 11 angeordnet. Im vorliegenden Ausführungsbeispiel handelt es sich um zwei Teilgetriebe 3a, 3b. Es können jedoch weitere vorgesehen sein. Im vorliegenden Ausführungsbeispiel wird bevorzugt, die beiden Teilgetriebe 3a, 3b in einem von 180° verschiedenen Winkel zueinander anzuordnen, um die Radiallager 16, 18 mit einer definierten Last zu beaufschlagen.

Das Teilgetriebe 3a weist zwei mit dem Zahnrad 11 kämmende Zahnräder 22a, 23a auf. Diese sind drehbar gelagert. Ihre Drehachsen sind parallel zu der Drehachse des Getriebeteils 12. Die Zahnräder 22a, 23a treiben über entsprechende Vorgelegewellen Zahnräder 24a, 25a, die ihrerseits mit einem Ritzel 26a kämmen. Das Ritzel 26a treibt den Generator 5a.

Entsprechendes gilt für das Teilgetriebe 3b unter Ersetzung des Buchstabenindex a gegen den Buchstabenindex b.

Nachfolgende Bezugnahmen auf Zahnräder und Generatoren ohne Buchstabenindex gelten für beide Teilgetriebe 3a, 3b gleichermaßen.

Die Zahnräder 24, 25 sind vorzugsweise mit einer anderen Zahnteilung versehen wie das Zahnrad 11. Außerdem kann eine andere Verzahnungsart gewählt sein. Beispielsweise sind die Zahnräder 24, 25, 26 schrägverzahnt oder geradverzahnt. Es kann auch sinnvoll sein, z.B. eine Zykloidenverzahnung zu wählen, wohingegen die Verzahnung der Zahnräder 11, 22, 23 als Evolventenverzahnung ausgeführt sein kann.

Die insoweit beschriebene Welle-Nabeneinheit 1 arbeitet wie folgt:

In Betrieb drehen die an der Nabe gehaltenen Rotorblätter 2 die Nabe mit relativ geringer Drehzahl von beispielsweise 0,5 Umdrehungen pro Sekunde. Die auf den Rotor und die Nabe 2 einwirkende Windlast wird als Axiallast von dem Axiallager 19 aufgefangen. Gewichtskräfte und sonstige Lasten tragen die Radiallager 16, 18. Greifen Windböen beispielsweise nur einseitig an dem Rotor an, führt dies zu zusätzlichen Radiallasten. Diese werden durch den relativ großen Stützabstand zwischen den Radiallagern 16, 18 gut aufgenommen und führen nur zu geringer Exzentrizität des Zahnrads 11. Dies insbesondere wenn das Radiallager 16 gewissermaßen "vor" der Nabe 2 (d.h. innerhalb von dessen Innenraum 14) und das Radiallager 18 gewissermaßen "hinter" dem Zahnrad 11 angeordnet sind. Jedenfalls aber sind das Zahnrad 11 und die Nabe 2 starr gekoppelt. Etwaige geringe Exzentrizitäten des Zahnrads 11 in Folge dynamischer Windlasten toleriert die Verzahnung des Zahnrads 11 und der mit ihm kämmenden Zahnräder 22, 23.

Die Zahnräder 24, 25 sind starr mit den Zahnrädern 22, 23 gekoppelt und treiben nun den Generator 5 über das Ritzel 26. Vorzugsweise läuft der Generator 5 mit einer hohen Drehzahl von z.B. 1000 Umdrehungen pro Minute oder mehr.

Figur 4 veranschaulicht eine abgewandelte Ausführungsform, bei der die Nabe 2 mit einer Hohlwelle 26 verbunden ist. Diese trägt wiederum das Zahnrad 11 und entspricht insoweit dem Getriebeteil 12 der vorigen Ausführungsform. Die Nabe 2 und das Zahnrad 11 sind wiederum starr gekuppelt. Ein erstes Radiallager 18 ist in oder an dem Zahnrad 11 angeordnet. Das zweite Radiallager 16 ist in relativ großem Abstand zu dem Radiallager 18 an dem hinteren Ende der Hohlwelle 27 angeordnet. Es liegt somit innerhalb eines von den Generatoren 5 umgebenen Raums oder Umkreises. Hinsichtlich des Getriebes 3 bzw. seiner Teilgetriebe 3a, 3b gelten die vorigen Ausführungen entsprechend.

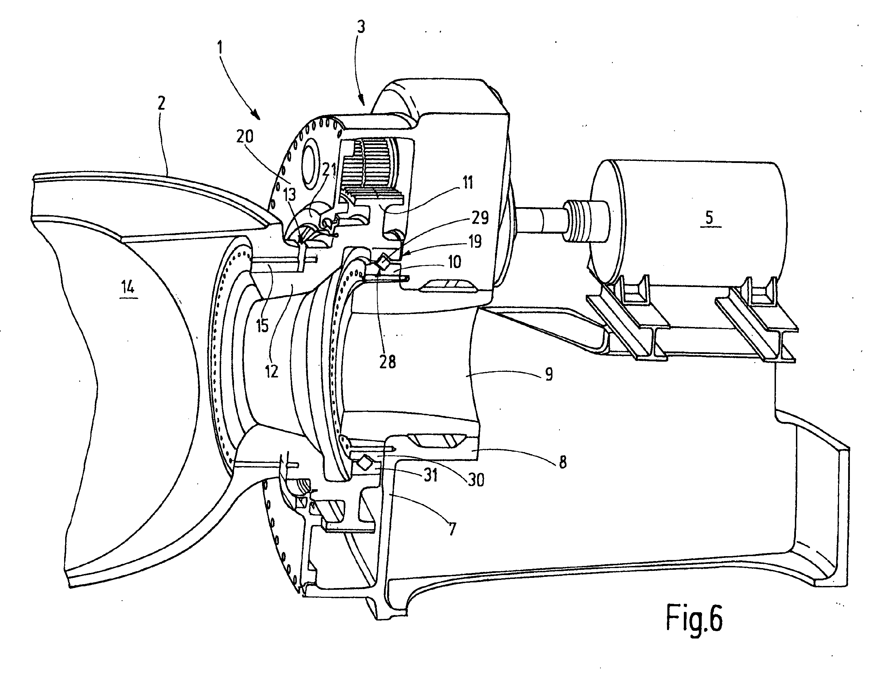

In Figur 6 ist eine abgewandelte Ausführungsform der insoweit beschriebenen Getriebe-Nabeneinheit 1 veranschaulicht. Bei dieser ist das Getriebeteil 12, das starr mit der Nabe 2 verbunden ist und diese lagert und das zugleich das Zahnrad 11 bildet oder trägt, durch eine Kompaktlagereinheit 28 gelagert. Vorzugsweise ist die Kompaktlagereinheit 28 die einzige Lagereinrichtung zur Lagerung des Getriebeteils 12. Sie übernimmt sowohl die Axiallagerung als auch die Radiallagerung. Gesonderte Axial- oder Radiallager sind vorzugsweise nicht vorgesehen. Die Kompaktlagereinheit 28 ist vorzugsweise in unmittelbarer Nachbarschaft zu dem Zahnrad 11 vorgesehen. Sie kann, wie in Figur 6 dargestellt, innerhalb des von dem Zahnrad 11 umschlossenen Volumens angeordnet sein. Alternativ kann die Kompaktlagereinheit 28 auch zwischen dem Zahnrad 11 und der Schulter 13 angeordnet sein, die den Sitz zur Befestigung der Nabe 2 bildet. Falls erforderlich kann die Kompaktlagereinheit 28 auch innerhalb der Nabe 2 angeordnet werden. Alternativ kann die Kompaktlagereinheit 28 zu den Generatoren 5 hin versetzt, d.h. in Figur 6 rechts neben dem Zahnrad 11 angeordnet sein. Die in Figur 6 veranschaulichte Anordnung wird jedoch bevorzugt.

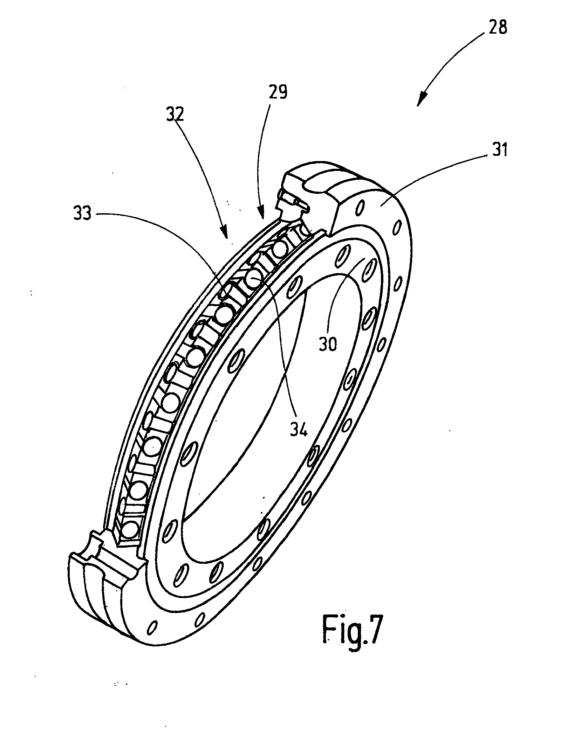

Figur 7 veranschaulicht die Kompaktlagereinheit 28 schematisch, die vorzugsweise als Kreuzrollenlager ausgebildet ist. Das Kreuzrollenlager weist einen Innenring 30 und einen Außenring 31 auf. Diese können, wie dargestellt, als separate Teile ausgebildet sein. Es ist jedoch auch möglich, den Innenring 3 als Bestandteil der Hülse 9 auszubilden. Ebenso ist es möglich, den Außenring 31 als Bestandteil des Getriebeteils 12 auszubilden.

Zwischen dem Innenring 30 und dem Außenring 31 sind Wälzkörper 32 angeordnet. Diese sind vorzugsweise als Zylinderrollen, Kegelrollen, tonnenförmige Rollen 33, 34 oder ähnliches ausgebildet. Die Rollen 33, 34 sind abwechselnd in zwei Gruppen sortiert. Die Rollen 33 der ersten Gruppe laufen auf einer inneren und äußeren Laufbahn, die in einem Winkel von im Wesentlichen 90° zu einem zweiten Laufbahnenpaar orientiert ist, auf denen die Rollen 34 der zweiten Gruppe laufen. Die Drehachsen der Rollen 33 liegen auf einem Kegel, der sich in einer ersten Axialrichtung öffnet. Die Drehachsen der Rollen 34 der zweiten Gruppe liegen auf einem Kegel, der sich in entgegen gesetzter Axialrichtung öffnet. Das Kreuzrollenlager 29 lagert das Getriebeteil 12 und somit sowohl das Zahnrad 11 als auch die Nabe 2 sowohl in Axialrichtung als auch in Radialrichtung. Vorzugsweise wird das Rollenlager 29 vorgespannt, so dass es spielfrei arbeitet.

Eine erfindungsgemäße Getriebe-Nabeeinheit 1 für eine Windenergieanlage weist ein drehbar gelagertes einstückiges Getriebeteil 12, 27 auf, das sowohl das Eingangszahnrad 11 des Getriebes 3 als auch die Nabe 2 trägt. Vorzugsweise sind lediglich zwei Radiallager 16, 18 zur Lagerung der Nabe 2 und des Zahnrads 11 vorgesehen. Axiallager können zusätzlich vorgesehen sein. Es ergibt sich eine besonders kompakte kurze und leichte Bauform für das Getriebe 3 und die Nabe 2. Das Konzept eignet sich insbesondere für besonders große Windenergieanlagen.

### Bezugszeichen

- 1: Getriebe-Nabeneinheit
- 2: Nabe
- 3: Getriebe
- 4: Antriebswelle
- 5: Generator, 5a, 5b
- 6: Gestell
- 7: Wand
- 8: Sitz
- 9: Hülse
- 10: Flansch
- 11: Zahnrad
- 12: Getriebeteil
- 13: Schulter
- 14: Innenraum
- 15: Befestigungsflansch
- 16: Radiallager
- 17: Dichtungsanordnung
- 18: Radiallager
- 19: Axiallager
- 20: Stirnwand
- 21: Dichtungsanordnung
- 22: Zahnrad 22a, 22b
- 23: Zahnrad 23a, 23b
- 24: Zahnrad 24a, 24b
- 25: Zahnrad 25a, 25b
- 26: Ritzel 26a, 26b
- 27: Hohlwelle
- 28: Kompaktlagereinheit
- 29: Kreuzrollenlager
- 30: Innenring
- 31: Außenring
- 32: Wälzkörper
- 33: Rollen
- 34: Rollen

## Patentansprüche

1. Getriebe-Nabeeinheit (1) einer Windenergieanlage,
mit einer Nabe (2) , an der zumindest ein Rotorblatt gehalten ist,
mit einem starren Getriebeteil (12, 27),
das einerseits mit der Nabe (2) fest verbunden ist,
das andererseits als Zahnrad (11) ausgebildet ist und
das an zumindest einem Lager (16, 18; 28) drehbar gelagert ist, die sowohl der Lagerung des Zahnrads (11) als auch der Lagerung der Nabe (2) dienen.

2. Getriebe-Nabeneinheit nach Anspruch 1, **dadurch gekennzeichnet, dass** zumindest eines der Lager (16, 18, 28) in Nachbarschaft des Zahnrads (11) angeordnet ist.

3. Getriebe-Nabeneinheit nach Anspruch 1, **dadurch gekennzeichnet, dass** zumindest eines der Lager (16, 18, 28) von der Nabe (2) aus gesehen an oder hinter dem Zahnrad (11) angeordnet ist.

4. Getriebe-Nabeneinheit nach Anspruch 1, **dadurch gekennzeichnet, dass** das zumindest eine Lager (28) als Kreuzrollenlager (29) ausgebildet ist.

5. Getriebe-Nabeneinheit nach Anspruch 1, **dadurch gekennzeichnet, dass** zumindest eines der Lager (11, 28) von der Nabe (2) aus gesehen an oder vor dem Zahnrad (11) angeordnet ist.

6. Getriebe-Nabeneinheit nach Anspruch 1, **dadurch gekennzeichnet, dass** zumindest eine der Lager (16, 18) innerhalb der Nabe (2) angeordnet ist.

7. Getriebe-Nabeneinheit nach Anspruch 1, **dadurch gekennzeichnet, dass** zumindest eines der Lager (16, 18) auf einem rohrförmigen Träger (9) angeordnet ist.

8. Getriebe-Nabeneinheit nach Anspruch 7, **dadurch gekennzeichnet, dass** der rohrförmige Träger (9) einen Tunnel umschließt, der in die Nabe (2) führt.

9. Getriebe-Nabeneinheit nach Anspruch 1, **dadurch gekennzeichnet, dass** die Nabe (2) mit dem starren Getriebeteil (12) fest verschraubt ist.

10. Getriebe-Nabeneinheit nach Anspruch 1, **dadurch gekennzeichnet, dass** das Getriebeteil (12) mit dem Zahnrad (11) nahtlos einteilig ausgebildet ist.

11. Getriebe-Nabeneinheit nach Anspruch 1, **dadurch gekennzeichnet, dass** das Getriebeteil (12) mit dem Zahnrad (11) fest verbunden ist.

12. Getriebe-Nabeneinheit nach Anspruch 1, **dadurch gekennzeichnet, dass** das Getriebeteil (12) mit dem Zahnrad (11) verschraubt ist.

13. Getriebe-Nabeneinheit nach Anspruch 1, **dadurch gekennzeichnet, dass** das Zahnrad (11) ein Stirnrad ist, das mit zumindest zwei voneinander beabstandeten Stirnrädern (22, 23) kämmt.

14. Getriebe-Nabeneinheit nach Anspruch 1, **dadurch gekennzeichnet, dass** von dem Zahnrad (11) mindestens zwei Generatoren (5a, 5b) angetrieben sind.

15. Getriebe-Nabeneinheit nach Anspruch 1, **dadurch gekennzeichnet, dass** zwei mit dem Zahnrad (11) kämmende Stirnräder (22a, 23a) mit einem gemeinsamen Generator (5a) treibend verbunden sind.

16. Getriebe-Nabeneinheit nach Anspruch 1, **dadurch gekennzeichnet, dass** die Lager zumindest zwei Radiallager (16, 18) und zumindest ein Axiallager (19) umfassen.

17. Getriebe-Nabeneinheit nach Anspruch 1, **dadurch gekennzeichnet, dass** zumindest eines der Lager (16, 18, 19) als Rollenlager ausgebildet ist.

18. Getriebe-Nabeneinheit nach Anspruch 1, **dadurch gekennzeichnet, dass** zumindest eines der Lager (16, 18, 19) als Gleitlager ausgebildet ist.
